# EUROPEAN PATENT APPLICATION

(11) **EP 4 614 718 A1**
(43) Date of publication of application: **10.09.2025**
(21) Application number: 23885658.7
(22) Date of filing: 27.10.2023
(51) Int. Cl.: H01M 50/595, H01M 10/04, H01M 10/0587, H01M 50/536, H01M 50/538, H01M 50/586

(54) **POWER STORAGE DEVICE**

(30) Priority: 31.10.2022 JP 2022174794
(71) Applicant: Panasonic Intellectual Property Management Co., Ltd., Kadoma-shi, Osaka 571-0057 (JP)
(72) Inventor: SAKAMOTO, Shinichi, Kadoma-shi, Osaka 571-0057 (JP); KOZUKI, Kiyomi, Kadoma-shi, Osaka 571-0057 (JP); GESHI, Shinya, Kadoma-shi, Osaka 571-0057 (JP)
(74) Representative: Eisenführ Speiser
(86) International application number: PCT/JP2023/038810
(87) International publication number: WO 2024/095902

(57) **Abstract**

A power storage device (10) comprises: an electrode body (20) in which a positive electrode (21), a negative electrode (22) and a separator (23) are wound; a cap (41) that is disposed on the upper end side of the electrode body (20) in the winding axis direction of the electrode body (2); and a positive electrode tab (25) that connects the positive electrode (21) and the cap (41). The positive electrode tab (25) is joined to the cap (41), and a leading end in the extending direction of the positive electrode tab (25) is covered by an insulating member (60).

## Description

### TECHNICAL FIELD

The present disclosure generally relates to a power storage device.

### BACKGROUND ART

A power storage device is used as a power supply for power of, for example, an electric vehicle. In recent years, along with popularization of the electric vehicle, cost reduction and productivity improvement of the power storage device are required. Along with cost reduction and productivity improvement of the power storage device, the power storage device is upsized. Along with upsizing of the power storage device, a high capacity and a high output of the power storage device are desired.

To realize the high output of the power storage device, reduction of an internal resistance of the power storage device is considered. For example, PATENT LITERATURE 1 discloses a technique of a multi-tab structure in which, in a band-shaped electrode plate of an electrode assembly, a plurality of tabs are disposed side by side in a longitudinal direction of the band-shaped electrode plate in order to reduce the internal resistance of the power storage device.

In a step of manufacturing the power storage device having the above-described multi-tab structure, a long tab is cut to fabricate a plurality of tabs, the plurality of fabricated tabs are disposed side by side in the longitudinal direction and joined on an upper end part of the band-shaped electrode plate of the electrode assembly, the band-shaped electrode assembly is wound to fabricate a wound electrode assembly, the plurality of tabs protruding from the upper end part are folded toward a center of the wound electrode assembly, the wound electrode assembly is inserted into an outer can from a bottom side of the outer can, and a tool is inserted into a center hollow portion of the electrode assembly from a lower side of the wound electrode assembly to ultrasonically join the plurality of tabs and a cap.

### CITATION LIST

### PATENT LITERATURE

PATENT LITERATURE 1: Japanese Unexamined Patent Application Publication No. 2000-251871

### SUMMARY

### TECHNICAL PROBLEM

In the above-described power storage device, a current is collected by the multi-tab structure, which reduces a collector resistance in the power storage device. However, further improvement of reliability of the power storage device is required.

Therefore, it is an advantage of the present disclosure to provide a power storage device excellent in reliability.

### SOLUTION TO PROBLEM

A power storage device according to the present disclosure comprises an electrode assembly in which a positive electrode, a negative electrode, and a separator are wound, an external terminal disposed on one end side of the electrode assembly in a winding axis direction of the electrode assembly, and a tab configured to connect one of the positive electrode and the negative electrode, and the external terminal, in which the tab is joined to the external terminal, and a front end part of the tab in an extending direction is covered with an insulating member.

### ADVANTAGEOUS EFFECT OF INVENTION

The power storage device according to the present disclosure can improve reliability.

### BRIEF DESCRIPTION OF DRAWING

FIG. 1 is a schematic cross-sectional view of a power storage device as an example of an embodiment as viewed from a side.
FIG. 2 is a plan view illustrating an electrode assembly before being wound.
FIG. 3 is a perspective view illustrating the electrode assembly before tabs are folded.
FIG. 4 is a plan view of the electrode assembly.
FIG. 5 is a plan view of an electrode assembly as another example of the embodiment.
FIG. 6 is a plan view of an electrode assembly as still another example of the embodiment.

### DESCRIPTION OF EMBODIMENTS

Examples of an embodiment according to the present disclosure are described in detail below. In the following description, specific shapes, materials, directions, numerical values, and the like are examples for facilitating understanding of the present disclosure, and can be appropriately changed based on applications, purposes, specifications, and the like.

### [Entire Configuration of Power Storage Device]

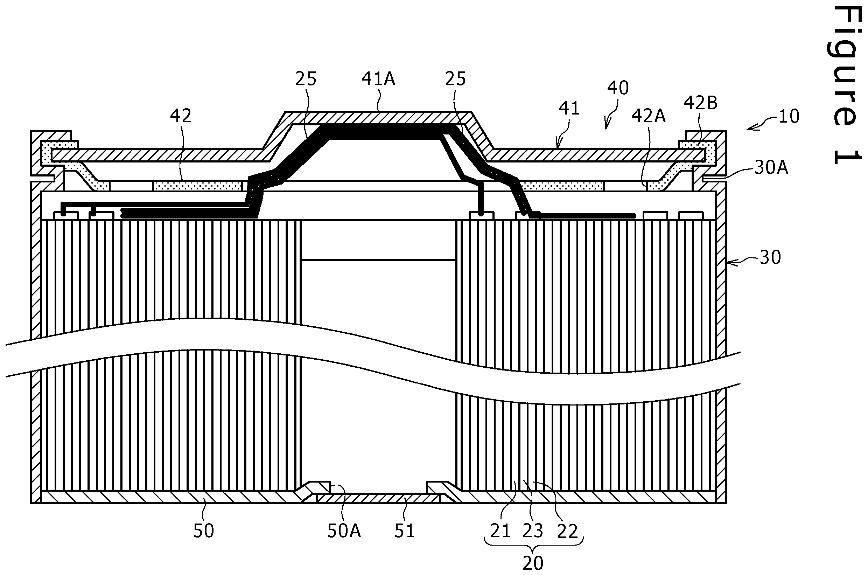

A power storage device 10 as an example of the embodiment is described with reference to FIG. 1.

The power storage device 10 is mainly used as a power supply for power. The power storage device 10 is used as a power supply of an electric motor apparatus driven by a motor, for example, an electric vehicle, an electric tool, an electric-assisted bicycle, an electric motorcycle, an electric wheelchair, an electric tricycle, and an electric cart. However, applications of the power storage device 10 are not limited, and the power storage device 10 may be used as a power supply for various electric apparatuses used indoors and outdoors except for the electric motor apparatus, for example, a cleaner, a wireless apparatus, an illumination apparatus, a digital camera, and a video camera.

The power storage device 10 comprises an electrode assembly 20, an outer can 30 formed in a cylindrical shape and housing the electrode assembly 20, a sealing assembly 4 including a cap 41 that is a positive electrode external terminal closing one of opening portions of the outer can 30, and a negative electrode collector plate 50 that is a negative electrode external terminal closing the other opening portion of the outer can 30. The outer can 30 houses an electrolytic solution together with the electrode assembly 20. The electrolytic solution may be an aqueous electrolytic solution; however, in the present embodiment, a non-aqueous electrolytic solution is used. In the following, for convenience of description, a side provided with the sealing assembly 40 of the power storage device 10 is referred to as an upper side, and a side provided with the negative electrode collector plate 50 is referred to as a lower side.

The power storage device 10 further comprises a plurality of positive electrode tabs 25 that extend from an upper end of the electrode assembly 20 in an axial direction (or also referred to as winding axis direction) and connect a positive electrode 21 configuring the electrode assembly 20 and a cap 41, and the negative electrode collector plate 50 that is disposed on a lower side of the electrode assembly 20 in the axial direction and is connected to a negative electrode 22 configuring the electrode assembly 20. In the power storage device 10 according to the present disclosure, an electrode comprising a tab joined to the cap 41 may be a negative electrode. Further, an electrode joining a collector plate and a core exposed portion on the lower side of the power storage device 10 may be a positive electrode. Although details are described below, the power storage device 10 according to the present embodiment does not include an upper insulating plate disposed between the electrode assembly 20 and the sealing assembly 40 (or groove portion 30A). However, the upper insulating plate that includes a plurality of openings into which the positive electrode tabs 25 are inserted may be provided on the power storage device 10.

The positive electrode 21, the negative electrode 22, and separators 23 of the electrode assembly 20 are band-shaped long bodies, and are alternately stacked in a radial direction of the electrode assembly 20 by being wound in a spiral shape. The electrode assembly 20 may include, on an innermost periphery, a hollow portion penetrating through the electrode assembly 20 in the axial direction. However, the electrode assembly 20 may not necessarily include the hollow portion. A mixture layer of the negative electrode 22 is formed to have a dimension slightly greater than a mixture layer of the positive electrode 21 in order to prevent precipitation of lithium. In other words, the mixture layer of the negative electrode 22 may be formed longer in a longitudinal direction and a width direction (transverse direction) than the mixture layer of the positive electrode 21. The separators 23 are each formed to have a dimension slightly greater than at least the positive electrode 21, and for example, two separators 23 are disposed to sandwich the positive electrode 21.

The positive electrode 21 includes a band-shaped positive electrode core, and a positive electrode mixture layer provided on at least one of surfaces of the core. As the positive electrode core, a foil of a metal stable in a potential range of the positive electrode 21, such as aluminum and an aluminum alloy, a film in which the metal is disposed on a surface layer, or the like can be used. The positive electrode mixture layer includes, for example, a positive electrode active material, a conductive agent such as acetylene black, and a binder such as polyvinylidene fluoride, and may be formed on both surfaces of the positive electrode core. As the positive electrode active material, for example, a lithium-transition metal composite oxide is used.

The positive electrode tabs 25 electrically connect the positive electrode 21 and the cap 41. The plurality of positive electrode tabs 25 are connected to the positive electrode 21, and may be directly joined to the positive electrode core by welding or the like. Therefore, the mixture layer may not be applied to portions on a front surface of the positive electrode core to which the positive electrode tabs 25 are joined. The plurality of positive electrode tabs 25 are directly joined to a lower surface of a raised portion 41A of the cap 41 of the sealing assembly 40. Note that the positive electrode tabs 25 may not be separated from the positive electrode core. For example, a part of the positive electrode core may extend in a tongue shape and perform a function of the positive electrode tab 25.

The negative electrode 22 includes a band-shaped negative electrode core, and a negative electrode mixture layer provided on at least one of surfaces of the core. As the negative electrode core, a foil of a metal stable in a potential range of the negative electrode 22, such as copper and a copper alloy, a film in which the metal is disposed on a surface layer, or the like can be used. The negative electrode mixture layer includes, for example, a negative electrode active material, and a binder such as a styrene-butadiene rubber (SBR), and may be formed on both surfaces of the negative electrode core. As the negative electrode active material, for example, graphite or a silicon-containing compound is used. The negative electrode 22 includes a core exposed portion on one end of the negative electrode core in a transverse direction. The core exposed portion is formed to extend in a longitudinal direction of the negative electrode core, and is not provided with the negative electrode mixture layer. The core exposed portion is disposed so as to protrude downward from the separators 23 in the axial direction. Although a detailed joining method is described below, the core exposed portion and the negative electrode collector plate 50 are joined by welding or the like.

The non-aqueous electrolyte includes a non-aqueous solvent and an electrolytic salt dissolved in the non-aqueous solvent. As the non-aqueous solvent, for example, esters, ethers, nitriles, amides, a mixed solvent of two or more of them, or the like is used. The non-aqueous solvent may contain a halogen substitute in which at least a part of hydrogen of these solvents is substituted with a halogen atom such as fluorine. Examples of the non-aqueous solvent include ethylene carbonate (EC), ethyl methyl carbonate (EMC), dimethyl carbonate (DMC), and a mixed solvent thereof. As the electrolytic salt, a lithium salt such as LiPF6 is used. Note that the non-aqueous electrolyte may not be an electrolytic solution, and may be gel electrolyte, solid electrolyte, or the like.

The outer can 30 is a cylindrical metal container in which both ends in the axial direction are opened. Examples of a metal configuring the outer can 30 include aluminum, copper, iron, nickel, and an alloy thereof. The outer can 30 according to the present embodiment is made of iron having a nickel-plated surface. Further, the outer can 30 includes an annular groove portion 30A provided along a circumferential direction. The groove portion 30A is provided at a position separated by a predetermined length from an upper-end opening edge part (upper end of outer can 30) near an upper-end opening portion of the outer can 30. The predetermined length is, for example, a length corresponding to 1% to 20% of a length of the outer can 30 in the axial direction.

The groove portion 30A is a portion in which a part of the outer can 30 projects to an inside of the outer can 30, and is formed by, for example, performing spinning on the outer can 30 from an outside. At a formation position of the groove portion 30A, the outer can 30 is reduced in diameter, and a thin line-shaped groove is provided on an outer peripheral surface of the outer can 30. The groove portion 30A may have a substantially U-shaped cross-section, and may be formed in an annular shape over the entire length of the outer can 30 in the circumferential direction. The groove portion 30A may be formed after the electrode assembly 20 is housed in the outer can 30. The outer can 30 used for the power storage device 10 according to the present disclosure is not limited to a configuration in which a cylindrical container having openings at both ends and a collector plate are joined. In particular, the outer can 30 having a shape in which one end in the axial direction is closed by a bottom integrated with a cylindrical portion may be used.

The sealing assembly 40 includes the cap 41 and a gasket 42, and is formed in a disk shape as a whole. The sealing assembly 40 is disposed on the groove portion 30A of the outer can 30, and is fixed to an upper end part of the outer can 30. The upper-end opening portion of the outer can 30 is folded inward in the radial direction, and is swaged to the sealing assembly 40. In other words, the sealing assembly 40 is fixed to the upper end part of the outer can 30 by the groove portion 30A of the outer can 30 and a swaged portion, and closes the opening portion of the outer can 30. The swaged portion is provided in an annular shape along the circumferential direction of the outer can 30, and the swaged portion and the groove portion 30A hold the sealing assembly 40 in the axial direction through the gasket 42.

The cap 41 as the positive electrode external terminal is a disk-shaped metal member, and is exposed to the outside of the outer can 30 to form a top surface of the power storage device 10. Examples of a metal configuring the cap 41 include aluminum, copper, iron, nickel, and an alloy thereof. The cap 41 according to the present embodiment is made of aluminum. The cap 41 has a shape in which a center part in the radial direction protrudes to the outside of the power storage device 10 (raised portion 41A). When the power storage device 10 is modularized to configure an assembled battery, a wiring material is connected to the cap 41. Therefore, the cap 41 functions as the external terminal of the power storage device 10, and is also referred to as the external terminal or a top cover. In the power storage device 10 according to the present embodiment, the plurality of positive electrode tabs 25 are connected to the cap 41, and the cap 41 functions as the positive electrode external terminal.

The gasket 42 is provided between an outer peripheral portion of the cap 41 and the outer can 30. The gasket 42 is a rubber member or a resin member that prevents the cap 41 and the outer can 30 from coming into contact with each other to secure electric insulation between the outer can 30 and the sealing assembly 40. The gasket 42 closes a gap between the outer can 30 and the sealing assembly 40 to seal the inside of the power storage device 10. The gasket 42 includes a disk-shaped base portion interposed between the groove portion 30A and a lower surface of the cap 41, and a cylindrical wall portion connected to an outer peripheral edge of the base portion and extending upward from the base portion. A positive electrode tab opening is provided at a center of the base portion. The wall portion covers a side peripheral surface of the cap. Further, an upper end part of the wall portion is bent so as to fall down to the inside in the radial direction by the swaged upper-end opening portion. The upper end part of the wall portion is in contact with an upper surface of the cap 41 because of being bent. It is assumed that the electrolytic solution is accumulated on a surface of the above-described base portion of the gasket 42 facing the lower surface of the cap 41. Therefore, by providing through holes 42A in the base portion of the gasket 42, such an electrolytic solution can be efficiently returned to the electrode assembly 20 side. For example, the plurality of through holes 42A are provided along the circumferential direction of the gasket 42. Note that the through holes 42A are optional in the power storage device 10. Further, the upper end part of the cylindrical portion of the gasket 42 also serves as an annular portion 42B extending from an outer peripheral portion of the cap 41 toward the center of the cap 41.

The negative electrode collector plate 50 as the negative electrode external terminal is a disk-shaped metal plate that is provided on the lower side of the electrode assembly 20 and is made of nickel, a nickel alloy, or the like. The negative electrode collector plate 50 is made of, for example, an iron material having a nickel-plated surface. The negative electrode collector plate may be made of copper or an alloy including copper. An outer peripheral edge of the negative electrode collector plate 50 is joined to a lower end opening portion of the outer can 30. Thus, the negative electrode collector plate 50 closes the lower end opening portion of the outer can 30 to form a bottom surface portion of the outer can 30. In other words, the negative electrode collector plate 50 has a function as the negative electrode external terminal and a function as the bottom surface portion of the outer can 30. A core exposed portion of the negative electrode 22 is joined to the negative electrode collector plate 50. The negative electrode collector plate 50 includes a center hole 50A. The center hole 50A is closed by a sealing plug 51 described below. In addition, the center hole 50A may be overlapped with the hollow portion of the electrode assembly 20 and the joining portion between the positive electrode tabs 25 and the cap 41 in the axial direction. The overlapping facilitates formation of the joining portion.

The sealing plug 51 is a metal sealing member formed in a disk shape. In the present embodiment, a safety vent mechanism operating when abnormality occurs in the power storage device 10 is provided in the sealing plug 51. For example, a ring-shaped engraved mark as the safety vent mechanism may be provided on the sealing plug 51. If abnormality occurs in the power storage device 10 and internal pressure rises, the engraved mark may preferentially break to form a gas discharge port in the sealing plug 51. Alternatively, an engraved mark may be provided on the negative electrode collector plate 50, and when the internal pressure of the power storage device 10 becomes predetermined pressure or more, the engraved mark may break to exhaust gas. The sealing plug 51 may be made of an elastic member, and is pressed into the center hole 50A.

### [Positive Electrode Tab]

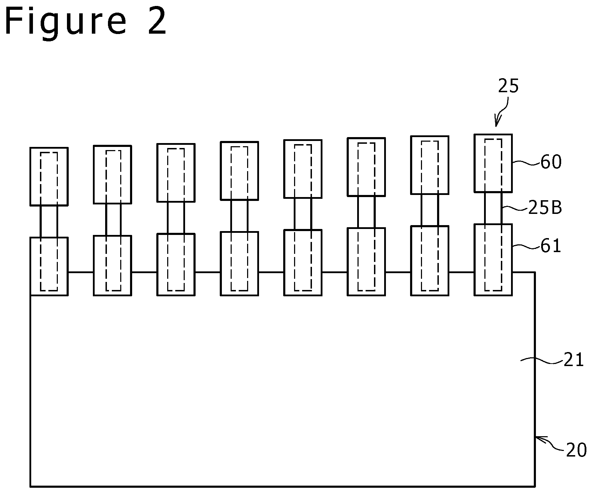

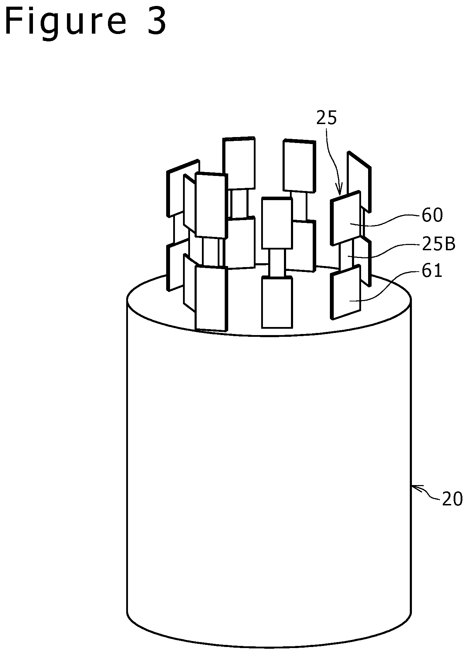

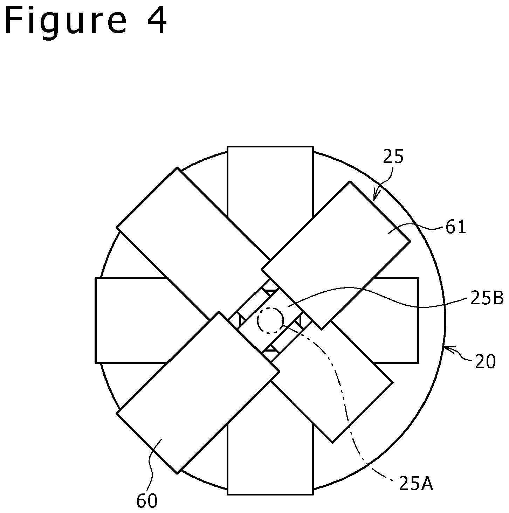

The positive electrode tabs 25 as an example of the embodiment are described in detail with reference to FIG. 2 to FIG. 4. FIG. 2 illustrates the positive electrode tabs 25 joined to the band-shaped electrode assembly 20 before being wound. FIG. 3 illustrates the positive electrode tabs 25 protruding upward from the wound electrode assembly 20. FIG. 4 illustrates the positive electrode tabs 25 folded on an upper surface of the wound electrode assembly 20.

As illustrated in FIG. 2, the positive electrode tabs 25 are strip-shaped conductive members (for example, made of aluminum). The positive electrode tabs 25 electrically connect the positive electrode 21 and the cap 41 (see FIG. 1). More specifically, in each of the positive electrode tabs 25, one end side is joined to the positive electrode 21, and an exposed portion 25B not covered with an insulating member 60 except for a front end part on the other end side is directly joined to the lower surface of the raised portion 41A of the cap 41. In other words, the positive electrode tabs 25 are directly joined to the lower surface of the raised portion 41A of the cap 41 without through a collector member and the like.

By directly joining the positive electrode tabs 25 to the cap 41, the number of parts in a conductive path from the electrode assembly 20 to the cap 41 can be reduced. This makes it possible to reduce a resistance value in the path from the electrode assembly 20 to the cap 41. As a result, an internal resistance value of the power storage device 10 can be reduced.

The positive electrode tabs 25 are joined to an upper end part in the axial direction, of the positive electrode 21 of the band-shaped electrode assembly 20 before being wound. In the present embodiment, as an example, the power storage device 10 comprises eight positive electrode tabs 25. However, the present disclosure is not limited to the number of positive electrode tabs according to the present embodiment. The power storage device 10 may comprise one positive electrode tab 25. The power storage device 10 may comprise eight or more positive electrode tabs 25.

Lengths in an extending direction of the plurality of positive electrode tabs 25 are gradually increased from one side to the other side in the longitudinal direction of the band-shaped electrode assembly 20. The one side in the longitudinal direction of the band-shaped electrode assembly 20 turns into a center side of the wound electrode assembly. On the other hand, the other side in the longitudinal direction of the band-shaped electrode assembly 20 turns into an outer periphery side of the wound electrode assembly. In FIG. 2, the lengths in the extending direction of the positive tabs 25 are along the axial direction. Therefore, when the positive electrode tabs 25 are folded on the upper surface of the wound electrode assembly 20, mutual interference of the positive electrode tabs 25 is suppressed. The interference indicates that, in a case where one positive electrode tab 25 is folded, a base end part of another positive electrode tab 25 is positioned below the one positive electrode tab 25.

In addition, in a case where the plurality of positive electrode tabs 25 include a first positive electrode tab 25 and a second positive electrode tab 25, the first and second positive electrode tabs 25 face each other with a center of the upper surface of the electrode assembly 20 in between, and the first positive electrode tab 25 is shorter than the second positive electrode tab 25, an insulating member provided on the first positive electrode tab 25 may be smaller in dimension in the extending direction of the positive electrode tabs 25 than an insulating member provided on the second positive electrode tab 25. Further, the insulating member provided on the first positive electrode tab 25 may be smaller in dimension in a width direction of the positive electrode tabs 25 than the insulating member provided on the second positive electrode tab 25. This makes it possible to prevent the above-described first positive electrode tab 25 from interfering with the second positive electrode tab 25 when the exposed portions 25B of the first and second positive electrode tabs 25 are stacked. At this time, when out of the exposed portions 25B of the first and second positive electrode tabs 25, the exposed portion 25B of the first positive electrode tab 25 to be stacked is on the electrode assembly side as compared with the exposed portion 25B of the second positive electrode tab 25, interference is particularly suppressed.

When the upper surface of the electrode assembly 20 is divided into two regions by a straight line passing through the center of the upper surface, the lengths of the positive electrode tabs 25 disposed in one of the regions may be shorter than the lengths of the positive electrode tabs 25 disposed in the other region. At this time, the dimensions in the extending direction or the width direction of the insulating members provided on the positive electrode tabs 25 in the one region may be smaller than the dimensions in the extending direction or the width direction of the insulating members provided on the positive electrode tabs 25 in the other region. At this time, when the exposed portions 25B of the positive electrode tabs 25 in the one region are disposed on the electrode assembly side and stacked as compared with the exposed portions 25B of the positive electrode tabs 25 in the other region, the above-described interference is particularly suppressed.

As described above, the positive electrode tabs 25 are joined to the upper end part of the positive electrode 21 of the band-shaped electrode assembly 20. **In** addition, the positive electrode tabs 25 protrude toward an upper side in the axial direction of the band-shaped electrode assembly 20. Furthermore, the positive electrode tabs 25 are joined while being arranged side by side with predetermined intervals along the longitudinal direction of the band-shaped electrode assembly 20. The predetermined intervals are determined such that, for example, when the band-shaped electrode assembly 20 is wound, the positive electrode tabs 25 are positioned at substantially equal angles as viewed from the axial direction (see FIG. 3 and FIG. 4).

As illustrated in FIG. 4, the plurality of positive electrode tabs 25 are disposed so as to radially extend from the center of the wound electrode assembly 20 as viewed from the axial direction. In addition, the exposed portions 25B of the plurality of positive electrode tabs 25 are stacked so as to partially overlap with one another at the center of the wound electrode assembly 20 as viewed from the axial direction. Furthermore, joining portions 25A joined to the lower surface of the raised portion 41A of the cap 41 are provided at a portion where the exposed portions 25B are stacked.

### [Insulating Member]

As illustrated in FIG. 2 to FIG. 4, the front end parts of the positive electrode tabs 25 in the extending direction (longitudinal direction) are covered with the insulating members 60. More specifically, front end sides of the positive electrode tabs 25 in the extending direction are covered with the insulating members 60 except for the joining portions 25A. The insulating members 60 are each formed in a substantially rectangular shape. Lengths of the insulating members 60 in a width direction (in transverse direction) may be longer than the lengths of the positive electrode tabs 25 in the width direction. Front end sides of the insulating members 60 in the longitudinal direction may be longer than the front end sides of the positive electrode tabs 25.

Each of the insulating members 60 according to the present embodiment is, for example, a sheet-shaped tape having insulating property. However, the insulating members according to the present invention are not limited to the insulating members 60 according to the present embodiment. The insulating members may be formed by baking denatured polypropylene having insulating property. The insulating members may be made of a potting material, an adhesive, a UV curing agent, and the like each having insulating property. It is sufficient for each of the insulating members 60 to cover at least a part of an edge of the corresponding front end part. Thus, a surface of the front end part other than the edge may not be covered with the insulating member 60.

The base end parts of the positive electrode tabs 25 in the extending direction are covered with insulating members 61. More specifically, base end sides of the positive electrode tabs 25 in the extending direction except for the joining portions 25A are covered with the insulating members 61. The insulating members 61 are each formed in a substantially rectangular shape. Lengths of the insulating members 61 in a width direction (in transverse direction) are preferably sufficiently longer than the lengths of the positive electrode tabs 25 in the width direction. Lengths on the base end sides of the insulating members 61 in the longitudinal direction may be slightly longer than the lengths on the base end sides of the positive electrode tabs 25.

In the power storage device 10, in the case where the positive electrode tabs 25 are folded on the upper surface of the wound electrode assembly 20, the upper surface of the electrode assembly 20 (except for joining portions 25A of positive electrode tabs 25) is covered with the insulating members 60 and the insulating members 61. This makes it possible to electrically insulate the electrode assembly 20 and the sealing assembly 40 from each other.

Each of the positive electrode tabs 25 is created by cutting a long conductive member in a strip shape. At the cutting, cut burrs may be formed on a cut part (for example, cross-sectional part along transverse direction) formed at the edge of the front end part of each of the positive electrode tabs 25. When the positive electrode tabs 25 and the cap 41 are ultrasonically joined, the cut burrs may be separated from the positive electrode tabs 25 and scattered by ultrasonic vibration. As a result, the cut burrs may become metal foreign substances in the outer can 30, and voltage failure of the power storage device 10 may occur.

The insulating members 60 and the insulating members 61 can prevent occurrence of voltage failure of the power storage device 10. More specifically, by covering the front end parts of the positive electrode tabs 25 with the insulating members 60, and covering the base end parts of the positive electrode tabs 25 with the insulating members 61, the cut burrs at the cut parts (cross-sectional parts along transverse direction) at the front end parts of the positive electrode tabs 25 are prevented from being separated from the positive electrode tabs 25 and being scattered due to ultrasonic vibration when the positive electrode tabs 25 and the cap 41 are ultrasonically joined. As a result, it is possible to prevent the cut burrs from becoming metal foreign substances in the outer can 30 and to prevent voltage failure of the power storage device 10 from occurring. Note that the insulating members according to the present disclosure may not be provided at both ends of the positive electrode tabs 25 in the extending direction. When the insulating members are disposed at least at the front end sides, reliability is improved as compared with an existing power storage device.

Further, as illustrated in FIG. 4, the insulating members 60 and the insulating members 61 can reduce the number of parts of the power storage device 10. More specifically, the insulating members 60 and the insulating members 61 can electrically insulate the electrode assembly 20 and the sealing assembly 40 from each other.

### [Other Embodiments]

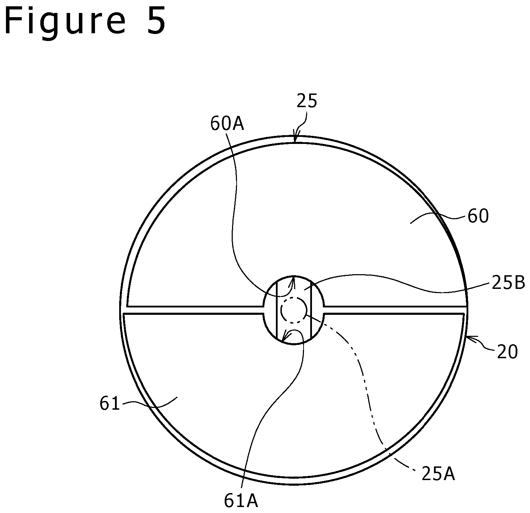

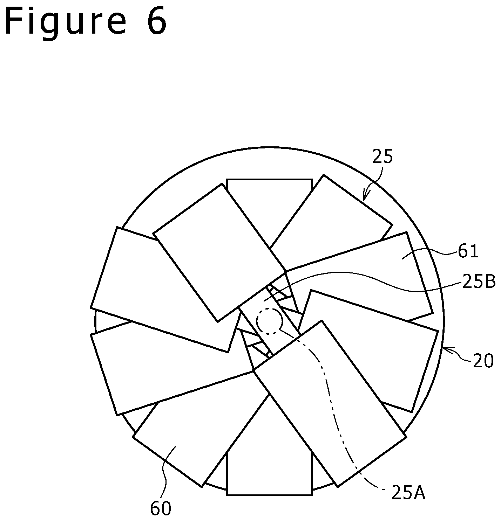

The positive electrode tabs 25 as the other examples of the embodiment are described in detail with reference to FIG. 5 and FIG. 6. FIG. 5 and FIG. 6 illustrate the positive electrode tabs 25 folded on the wound electrode assembly 20.

**In** the following, description of a configuration similar to the configuration according to the above-described embodiment is omitted. **In** addition, members similar to the members according to the above-described embodiment are described by using reference numerals similar to the reference numerals according to the above-described embodiment.

As illustrated in FIG. 5, in the present embodiment, the power storage device 10 comprises only one positive electrode tab 25. The front end part of the positive electrode tab 25 in the longitudinal direction is covered with the insulating member 60. More specifically, the front end side of the positive electrode tab 25 in the longitudinal direction except for the joining portion 25A is covered with the insulating member 60. The insulating member 60 is formed in a semicircular shape having a diameter substantially equal to the diameter of the upper surface of the electrode assembly 20 as viewed from the axial direction. The insulating member 60 includes a notch 60A so as to expose the joining portion 25A provided on the exposed portion 25B as viewed from the axial direction.

The base end part of the positive electrode tab 25 in the extending direction is covered with the insulating member 61. More specifically, the base end side of the positive electrode tab 25 in the longitudinal direction except for the joining portion 25A is covered with the insulating member 61. The insulating member 61 is formed in a semicircular shape having a diameter substantially equal to the diameter of the upper surface of the electrode assembly 20 as viewed from the axial direction. The insulating member 61 includes a notch 61A so as to expose the joining portion 25A as viewed from the axial direction.

The insulating member 60 according to the present embodiment is, for example, a sheet-shaped tape having insulating property. However, the insulating member according to the present disclosure is not limited to the insulating member 60 according to the present embodiment. **In** the power storage device 10, in a case where the positive electrode tab 25 is folded on the upper surface of the wound electrode assembly 20, the entire upper surface of the electrode assembly 20 (except for joining portion 25A in exposed portion 25B of positive electrode tab 25) is covered with the insulating member 60 and the insulating member 61. This makes it possible to electrically insulate the electrode assembly 20 and the sealing assembly 40 from each other.

Even in the case where the power storage device 10 comprises only one positive electrode tab 25, the insulating member 60 and the insulating member 61 according to the present embodiment can electrically insulate the electrode assembly 20 and the sealing assembly 40 from each other as described above. Therefore, it is unnecessary to provide an upper insulating plate that is conventionally disposed between the electrode assembly 20 and the sealing assembly 40. However, to further enhance reliability, an insulating plate may be provided between the insulating member 60 and the sealing assembly 40 or between the insulating member 60 and the electrode assembly 20 according to the present embodiment.

As illustrated in FIG. 6, in the present embodiment, the lengths of the positive electrode tabs 25 are made equal to one another. The positive electrode tabs 25 are joined while being arranged side by side with predetermined intervals along the longitudinal direction of the positive electrode 21 of the band-shaped electrode assembly 20 (not illustrated). The predetermined intervals are determined such that, when the band-shaped electrode assembly 20 is wound, the positive electrode tabs 25 are positioned at substantially equal angles as viewed from the axial direction. Further, the predetermined intervals may be determined such that one positive electrode tab 25 is not disposed on a side facing the other positive electrode tab 25 with the center of the upper surface of the electrode assembly 20 in between. When the positive electrode tab 25 is not disposed on a side opposite to a predetermined positive electrode tab 25 with the above-described center in between, the above-described positive electrode tab 25 on the opposite side hardly comes close to the predetermined positive electrode tab 25 from the opposite side. Thus, when the predetermined positive electrode tab 25 is folded, interference hardly occurs. This facilitates flexible design of a dimension of the predetermined positive electrode tab 25 and a dimension of an insulating member provided on the positive electrode tab 25.

The front end sides of the positive electrode tabs 25 except for the joining portions 25A are covered with the insulating members 60. **In** addition, the base end sides of the positive electrode tabs 25 except for the joining portions 25A are covered with the insulating members 61. Further, the insulating members 60 and the insulating members 61 each have a rectangular shape as in the above-described embodiment. Furthermore, the insulating members 60 and the insulating members 61 are each made of a tape having insulating property.

**In** the power storage device 10, in a case where the positive electrode tabs 25 are folded on the upper surface of the wound electrode assembly 20, the entire upper surface of the electrode assembly 20 (except for joining portions 25A of positive electrode tabs 25) is covered with the insulating members 60 and the insulating members 61. This makes it possible to electrically insulate the electrode assembly 20 and the sealing assembly 40 from each other.

**In** the present embodiment, the positive electrode tab 25 is not disposed on a side facing each of the positive electrode tabs 25 with the center of the electrode assembly 20 in between as described above. Therefore, even if the lengths of the positive electrode tabs 25 are equal to one another when the positive electrode tabs 25 are folded on the upper surface of the wound electrode assembly 20, mutual interference of the positive electrode tabs 25 can be suppressed.

The present disclosure is not limited to the above-described embodiment and the modifications thereof, and can be variously changed and improved without departing from the matters disclosed in the claims of the present application. In the above-described embodiment, the configuration of the power storage device according to the present disclosure is described using the positive electrode tabs; however, negative electrode tabs may be used in place of the above-described positive electrode tabs, and insulating members may be provided on the negative electrode tabs.

### REFERENCE SIGNS LIST

10 Power storage device, 20 Electrode assembly, 21 Positive electrode, 22 Negative electrode, 23 Separator, 25 Positive electrode tab, 25A Joining portion, 25B Exposed portion, 27 Upper insulating plate, 30 Outer can, 30A Groove portion, 40 Sealing assembly, 41 Cap (positive electrode external terminal), 41A Raised portion, 42 Gasket, 42A Through hole, 42B Annular portion, 50 Negative electrode collector plate (negative electrode external terminal), 50A Center hole, 51 Sealing plug, 60 Insulating member, 60A Notch, 61 Insulating member, 61A Notch

## Claims

1. A power storage device, comprising:
an electrode assembly in which a positive electrode, a negative electrode, and a separator are wound;
an external terminal disposed on one end side of the electrode assembly in a winding axis direction of the electrode assembly; and
a tab configured to connect one of the positive electrode and the negative electrode, and the external terminal, wherein
the tab is joined to the external terminal, and
a front end part of the tab in an extending direction is covered with an insulating member.

2. The power storage device according to claim 1, further comprising a plurality of the tabs, wherein
each of the plurality of the tabs includes an exposed portion not covered with the insulating member, at a portion except for the front end part in the extending direction, and
the exposed portions of the plurality of the tabs are overlapped with one another, and the overlapped exposed portions are joined to the external terminal.

3. The power storage device according to claim 2, wherein
a base end part of each of the tabs in the extending direction is covered with the insulating member.

4. The power storage device according to claim 3, wherein
a front end side and a base end side of each of the tabs in the extending direction except for a portion to be joined to the external terminal are covered with the insulating members.

5. The power storage device according to claim 4, wherein
one end surface of the electrode assembly in the winding axis direction except for the portions where the tabs are joined to the external terminal is covered with the insulating members.

6. The power storage device according to any one of claims 2 to 5, wherein
the tabs are radially arranged from a center part of the external terminal.

7. The power storage device according to any one of claims 2 to 6, wherein
the adjacent tabs are arranged at substantially equal angles.

8. The power storage device according to any one of claims 2 to 7, wherein
the plurality of the tabs have different lengths in the extending direction.

9. The power storage device according to any one of claims 2 to 7, wherein
no tab is disposed on a side facing each of the tabs with a center of the electrode assembly in between.

10. The power storage device according to any one of claims 2 to 7, wherein
one of the tabs and another of the tabs face each other with a center of the electrode assembly in between, and the one tab is shorter than the other tab.

11. The power storage device according to claim 10, wherein
a dimension of the insulating member provided on the one tab is smaller than a dimension of the insulating member provided on the other tab.

12. The power storage device according to claim 10, wherein
the exposed portion of the one tab is disposed on the electrode assembly side as compared with the exposed portion of the other tab, and is stacked.
